# EUROPEAN PATENT SPECIFICATION

(11) **EP 1 149 054 B1**
(45) Date of publication and mention of the grant of the patent: **05.03.2003**
(21) Application number: 99966314.9
(22) Date of filing: 15.12.1999
(51) Int. Cl.: C02F 1/46, C02F 1/78, C25B 9/00

(54) **APPARATUS FOR TREATING WATER FOR A POINT-OF-USE POTABLE WATER SOURCES**
VORRICHTUNG ZUR BEHANDLUNG VON TRINKWASSER AN DEM VERWENDUNGSORT
DISPOSITIF DE TRAITMENT D'EAU POUR UN POINT D'UTILISATION DE SOURCES D'EAU POTABLE

(30) Priority: 16.12.1998 US 112452 P; 09.02.1999 US 247767
(43) Date of publication of application: 31.10.2001
(73) Proprietor: Lynntech, Inc., College Station, TX 77840 (US)
(72) Inventor: ANDREWS, Craig, C., College Station, TX 77840 (US); MURPHY, Oliver, Bryan, TX 77802 (US); HITCHENS, G. Duncan, Bryan, TX 77802 (US)
(74) Representative: Frankland, Nigel Howard
(86) International application number: US9929861
(87) International publication number: WO00035813

(56) References cited:
- EP-A- 0 048 559
- EP-A- 0 342 169
- EP-A- 0 822 271
- WO-A-98/42617
- DE-A- 19 653 034
- US-A- 4 759 847
- US-A- 4 978 438
- US-A- 5 158 454
- US-A- 5 626 769
- US-A- 5 682 671
- US-A- 5 753 100
- PATENT ABSTRACTS OF JAPAN vol. 013, no. 468 (E-834), 23 October 1989 (1989-10-23) & JP 01 183071 A (MEIDENSHA CORP), 20 July 1989 (1989-07-20) & JP 01 183071 A (MEIDENSHA CORP.) 20 July 1989 (1989-07-20)
- PATENT ABSTRACTS OF JAPAN vol. 015, no. 248 (C-0843), 25 June 1991 (1991-06-25) & JP 03 079783 A (MITSUBISHI ELECTRIC CORP), 4 April 1991 (1991-04-04) & DATABASE WPI Week 199120 Derwent Publications Ltd., London, GB; AN 144102 & JP 03 079783 A (MITSUBISHI DENKI KK), 4 April 1991 (1991-04-04) & JP 03 079783 A (MITSUBISHI ELECTRIC CORP.) 4 April 1991 (1991-04-04)

## Description

THE PRESENT INVENTION relates to an apparatus for treating water and more particularly relates to an apparatus for treating water for a point of use potable water source such as a reverse osmosis system, refrigerators, drinking fountains, etc.

It has been proposed before to provide apparatus for treatment of water and one prior apparatus is disclosed in US-A-4978438. This specification discloses an electrolytic cell for treating water with gasses that are evolved by electrolysis. The cell comprises an anode compartment separate from a cathode compartment by a diaphragm. A gas permeable and liquid impermeable window is provided which is located between the cell so that gas from the anode compartment and/or the cathode compartment my pass through the window to make contact with the water to be treated. In use of the electrolytic cell liquid is present in the anode compartment of the cathode compartment and thus the window has liquid on each side of it.

The present invention seeks to provide an improved apparatus.

According to one aspect of this invention there is provided an apparatus comprising (a) a point-of-use water treatment system for potable water having a water inlet 150 and a water outlet 158; (b) an electrochemical ozone generator 155 having an ozone-forming anode 302, a cathode 303, an ion exchange membrane 301 disposed between the anode and the cathode, and a water supply port 100; and (c) an ozone gas delivery channel 104,101,100 providing communication of ozone gas between the anode and the water treatment system, the ozone gas delivery channel having two hydrophobic gas-liquid separator membranes 102,103 disposed therein to form a gas-containing gap 101 to prevent mixing of liquid water between the anode and the water treatment system.

Preferably, the water treatment system includes one or more water treatment devices and wherein the water treatment system further comprises a reactant water supply outlet providing fluid communication from a point downstream of at least one of the one or more water treatment devices to the electrochemical ozone generator.

Conveniently, a secondary electrochemical cell may be included having an anode in fluid communication with the reactant water supply outlet and a cathode fluid outlet in fluid communication with the anode of the ozone generator.

Preferably, the secondary electrochemical cell provides cathode fluid to the anode of the electrochemical ozone generator at a pressure greater than the pressure in the water treatment system adjacent the ozone gas delivery channel.

Conveniently, the at least one of the one or more water treatment devices is an electrodeionization device or an electrodialysis device.

Preferably, the water treatment system includes a water storage reservoir and wherein the ozone gas delivery channel communicates ozone gas to pressurise the water storage reservoir.

The apparatus may further comprise a differential pressure sensor to detect the pressure differential across the bydiophobic gas-liquid separator membrane.

The apparatus may also further comprise a controller in electronic communication with the differential pressure sensor and the electrochemical ozone generator, wherein the controller controls the operation of the electrochemical ozone generator.

The apparatus may further comprise a liquid water sensor disposed in the gas chamber; and a controller in communication with the liquid water sensor and the electrochemical ozone generator.

The apparatus may further comprise a dissolved ozone sensor disposed in the water treatment system.

Conveniently, the apparatus also comprises voltage probes disposed across the anode and cathode.

Advantageously, the apparatus also comprises an electronic current sensor in series with the electrochemical ozone generator.

Conveniently, the apparatus further comprises a catalytic destruct system in selective communication with the ozone outlet and the cathode to convert hydrogen and ozone to water vapour and oxygen.

Preferably, the anode, cathode and ion exchange membrane are secured in intimate contact within a pre-moulded thermoplastic frame.

Conveniently, the anode, cathode and ion exchange membrane are secured in intimate contact by injection moulding.

Advantageously, the water treatment system has a water treatment device, wherein the water treatment device is a particle filter, ultrafiltration unit, carbon filter, water softener, ion exchange bed, reverse osmosis membrane, electrodeionization device, electrodialysis device or combinations thereof.

Conveniently, the apparatus further comprises a housing that replaceably secures the treatment device and the ozone generator therein.

Preferably, the water treatment device and the electrochemical ozone generator form a unitary structure.

Alternatively, the water treatment device and the electrochemical ozone generator are disposed in a common housing having a water inlet and a water outlet.

Preferably, the housing includes an outlet for removing gases evolved at the anode and cathode.

Advantageously, the water treatment device and the electrochemical ozone generator are disposed in series.

Conveniently, the housing has first and second removal endplugs at opposing ends of the housing and a shoulder disposed intermediate between the opposing ends to define two opposing sections on either side thereof, wherein the water treatment device and the electrochemical ozone generator are disposed within the opposing sections.

Preferably, the water inlet to the housing is in fluid communication with the cathode and the water treatment device.

Conveniently, the ion exchange membrane is tubulated, and wherein the water inlet to the housing is in fluid communication with the tubulated ion exchange membrane and the water treatment device.

Advantageously, the apparatus further comprises a device in fluid communication, with the water outlet, wherein the device is a refrigerator, freezer, ice maker, water vending machine, beverage vending machine, water fountain, pour-through pitcher, filtering faucet, or a reverse osmosis unit.

Preferably, the point-of-use water treatment system is a system adapted to deliver water containing ozone.

Conveniently the apparatus further comprises a household appliance in fluid communication with the water outlet, wherein the household appliance is a dishwasher, clothes washer, toy wash, or contact lens washer.

Preferably the apparatus further comprises medical equipment in fluid communication with the water outlet.

Conveniently the apparatus further comprises a cabinet for cleaning a medical instrument in fluid communication with the water outlet, wherein the medical instrument is a rigid endoscope, flexible endoscope, catheter, surgical instrument, dental fixture, prosthesis or combinations thereof.

Conveniently, the point-of use water treatment system is a system adopted to produce disinfected water.

Advantageously, the point-of-use water treatment system is a system adapted to produce ozone gas.

Conveniently, the water inlet is in fluid communication with the cathode.

Alternatively, the water inlet is in fluid communication with the anode.

Preferably, the ion exchange membrane is tubulated, and wherein the water supply port is in fluid communication with the tubulated membrane.

In one embodiment the gas-containing gap is maintained by a level control valve disposed in the ozone gas delivery channel.

Alternatively, the gas-containing gap is maintained by a float system disposed in the ozone gas delivery channel.

The electrochemical cell may be fabricated by (a) securing an assembly including an anode, a cathode, and a proton exchange membrane disposed between the anode and the cathode; (b) placing the assembly in a mould; (c) maintaining the anode, proton exchange membrane, and the cathode at a temperature below about l80°C and (d) injection moulding around the assembly.

According to another aspect of this invention there is provided the method of making an electrochemical cell may comprise (a) securing an anode, a cathode and an ion exchange membrane disposed between the anode and the cathode within a pre-moulded thermoplastic frame, wherein the thermoplastic frame maintains the anode, cathode and membrane in intimate contact

Preferably, the method further includes injection moulding around the pre-moulded thermoplastic frame.

Alternatively, the method further includes injection moulding around a plurality of pre-moulded thermoplastic frames.

In a preferred apparatus in accordance with the invention the water treatment system has a carbon filter and a reverse osmosis purifier in series; wherein the ozone gas delivery channel communicates ozone gas between the anode and a point upstream of the carbon filter so that microbial growth in the carbon filter is controlled and any residual ozone is eliminated from the water stream by the carbon filter to prevent oxidation of the reverse osmosis membrane.

In order that the invention may be more readily understood, and so that further features thereof may be appreciated, the invention will now be described, by way of example, with reference to the accompanying drawings which will now be briefly described
Figure 1 is a schematic view of an electrochemical ozone generator sub-system having an electrochemical ozone generator with hydrophobic phase separating membranes to prevent the anode water and the water to be treated from mixing. A differential pressure sensing element is used to verify the integrity of the phase separation membranes.
Figure 2 is a block diagram of a water treatment system having an electrochemical ozone generator operating at a pressure substantially higher than ambient pressure. Water at a standard delivery pressure, such as house pressure, is delivered to the system. An electrochemical ozone generator sub-system is directly attached to the water delivery or distribution system.
Figure 3 is a block diagram of a water treatment system having an ozone generation and delivery sub-system to deliver and engage ozone on the inlet side to a process.
Figure 4 is a block diagram of a water quality monitoring system having an audible or visual indicator. Based upon the available information, the controller may control the operation of the ozone generation sub-system and may provide one or more indicators as to the status of the system.
Figure 5 is a block diagram showing a possible waste gas destruct sub-system as a part of an overall water treatment sub-system.
Figure 6A is a cross sectional diagram of an electrochemical cell. This core assembly may be used as a single cell electrolyzer or may be injection molded as an insert to form a complete electrolyzer system.
Figure 6B is a sectional diagram of another design of electrochemical cell.
Figure 7 is a schematic diagram of a water treatment, storage, and delivery system that contains a bladderless reservoir to provide short term water delivery when the water generation rate is substantially less than the short term demand. Through management of system variables, the system designer may insure that a minimum average contact time is provided.
Figure 8 is a system diagram of a water treatment unit having multiple electrochemical systems operating at various pressures where the operating pressure of an electrochemical gas generator may be equal to or substantially higher than the pressure in the main water stream.
Figure 9 is a diagram of an example ozone generator that has been designed and fabricated to be directly connected to a water reservoir.
Figure 10 is a diagram showing the integration of a point-of-use micro-organism control device into a refrigerator having a through-the-door feature.

In the embodiments of the invention which will be described below, hydrophobic membranes are used.

There is no particular restriction on the nature of the hydrophobic membranes to be used in the apparatus and the hydrophobic membrane may be formed with, for example, PTFE (ethylene, tetrafluoride resin) so called TEFLON® (a trademark of DuPont of Wilmington, Delaware), PFA (ethylene tetrafluoride-perfluoroalkoxyethylene copolymer resin), PVDF (vinylidene fluoride resin), FEP (ethylene tetrafluoride-propylene hexafluoride copolymer resin), ETFE (ethylene tetrafluoride-ethylene copolymer resin), etc., and the pore size of the hydrophobic membrane may be selected such that water does not permeate through the hydrophobic membrane used, and is preferably from about 0.01 to 10 µm, and more preferably from 0.1 to 2 µm thick.

Two hydrophobic membranes in series serve the function of ensuring separation between the waters of different quality, e.g., the water to be treated may contain chlorine or ions that should not be allowed to come in contact with the anode water and the anode water may contain by-products or contaminants that should not be allowed to come into contact with the anode water and the anode water may contain by-products or contaminants that should not be transferred to the water to be treated. The two water types may be maintained at different pressures and the system may be equipped with a differential pressure sensor to detect the failure of the separating membranes.

The volume enclosed between the two membranes may be maintained at a pressure different than either the anode water source or the source of water to be disinfected. A pressure sensor or other means of monitoring the pressure differential across each hydrophobic membrane may be used to ensure the integrity of each of the membranes.

The electrochemical ozone generator may be operated at a pressure that is comparable to the pressure of the water to be disinfected. In this manner, the ozone gas being generated may be directly introduced to the water to be disinfected without the requirement for a venturi, pumps or compressors.

The ozone gas generated by the electrochemical ozone generator may be introduced upstream of a water filtration and/or treatment system to prevent the growth of biofilms which are known to shorten the useful life of filters, carbon blocks and other filtration media.

The ozone gas generated by the electrochemical ozone generator may be introduced upstream of a membrane-based water treatment system, such as reverse osmosis (RO) or ultrafiltration systems, to prevent the growth and accumulation of biofilms which are known to reduce the functionality of such membranes. The ozone may be introduced periodically or in a controlled manner to prevent oxidation of the membrane of the water treatment system or other components having limited tolerance to ozone.

A visual or audible indicator may be used to provide an indication to the user as to the performance of the electrochemical ozone generator. In one embodiment, the indication is the result of a sensor designed and operated to quantify the amount of ozone dissolved in the water to be disinfected, the anode reservoir, or any other suitable monitoring location. In another embodiment, the indication is the result of the measurement of the voltage across and the current through the electrochemical cell generating the ozone. The output of the electrochemical cell may be correlated to the operating parameters of the cell and may therefore be used to monitor the performance of the ozone generator. As an example, the voltage between the anode and the cathode of the electrochemical cell is indicative of the electrochemical process, and the voltage may be used to determine if the electrochemical cell is producing oxygen or ozone.

In many installations of the system, the waste hydrogen gas that is a byproduct of the electrochemical ozone generator process may not be vented or is not easily disposed. Therefore, a hydrogen destruct system may be incorporated to combine hydrogen with oxygen from the air to form water vapour which is more easily disposed.

Optionally, the hydrogen may be combined with any surplus gas stream that originated from the anode of the electrochemical ozone generator. The source of this gas stream may be excess gas directly from the generator or it may be gas that is vented from the water to be disinfected after the ozone has been engaged with the water to be disinfected.

The electrochemical ozone generator may operate as a sub-system to an overall water treatment system that includes a reverse osmosis system. Water from the reverse osmosis system may be used in the anode of the electrochemical ozone generator directly or after further processing using, for example, a resin bed designed to scavenge ions from the water source. The resulting ozone may be used to treat water of any quality, before and/or after various processes and sub-systems of the water treatment system.

The preferred systems of the present invention lend themselves to "point-of-use" applications, which for all purposes herein shall be taken to include "point-of-entry" applications. The "point-of-entry" is generally accepted to be the place where water enters the home or facility from the water source while "point-of-use" is in the vicinity of it consumption. The water treatment at the point-of-entry processes the water for the entire home or facility. In contrast, point-of-use water treatment processes the water in the general location where the water is consumed for drinking, bathing, washing, or the like.

Cooling of the electrolytic cell to or below ambient temperature may be provided by the process being treated. Cooling is generally required to prevent the inefficiencies of the electrochemical processes from raising the temperature of the anode above approximately 35°C to minimise the thermal decomposition of the ozone produced Cooling of the ozone or ozone-containing water to temperatures between ambient and the freezing point of water serves to extend the lifetime of the ozone as well as enhancing the solubility of the ozone in the water. As an example, should the ozone generator be utilised to treat water entering or being delivered from a refrigerator or freezer, the ozone generator may be located within the refrigerator or in partial thermal contact or communication with the freezer.

Water containing high quantities of dissolved ozone may be provided at the point-of-use for use as a wash or disinfectant. An additional water faucet near the kitchen sink may be used to provide a stream of ozone-containing water for the washing of food, countertops, toys, utensils etc.

The construction of the ozone generator may be such that it lends itself to mass production in the form of direct injection moulding of a thermoplastic around the electrodes, membrane, flow fields etc. The proton exchange membrane (PEM) and the anode catalyst are both temperature sensitive and must be protected from excessive temperatures (above 180°C) during the manufacturing process. Furthermore, the proton exchange membrane is not a solid, but takes on properties similar to a gel when fully hydrated. Therefore, another aspect of the invention is a sealing ring which provides a bead-and-groove or elastomer seal with the membrane around, the active area of the electrolyzer and extends out to the thermoplastic where a seal is formed during the injection moulding process. During manufacturing, the components are pre-assembled, clamped together with a thermoplastic clip, inserted in to the injection mould and the thermoplastic injected. The anode and the cathode porous substrates are in direct contact with the moulding process front the catalyst and membrane.

The quality of the water used in the electrochemical cell may be improved through an electrodeionization or electrodialysis process to provide a continuous stream of deionized water without the need for consumables. Regardless of the quality or source of the water, which may include a potable and/or filtered water source, water must be provided to the electrochemical cell in sufficient quantities to support the electrolysis reaction of water to form ozone and to hydrate the ion exchange membrane. Water is traditionally provided directly to the anode since this is where the ozone formation reaction takes place and water is transferred from the anode to the cathode by electroosmosis. However, in embodiments of the present invention, water may be provided to the cathode for back diffusion to the anode and membrane laterally to the membrane (perhaps a tubulated membrane as described in U.S. Patent No. 5,635,039), or by a wick provided for that specific purpose.

When the ozone generator is used in conjunction with a refrigerator, a portion of the ozone gas from the generator or of the un-consumed ozone gas from the water to be treated may be vented into the refrigerator or freezer chamber to provide treatment of the air, thus, odour control and food freshness can be maintained in the refrigerator and freezer compartments.

When the ozone gas is being used to provide disinfection of potable water, any residual ozone may be eliminated from the potable water stream by a carbon block, granulated activated carbon, ultraviolet lamp, microwaves or heat.

The electrochemical ozone generator may be optimised for placement within other components of the water treatment system. For example, the ozone generator may be entirely contained within the RO water reservoir with necessary connections for electrical leads and hydrogen venting, placed entirely within a filter housing, water spigot, etc. Furthermore, the electrochemical ozone generator may be made disposable and integrated with the other disposable components such as a reverse osmosis membrane, carbon filter and/or other filter elements, etc.

Ozone gas not dissolved in the water to be disinfected may be removed with the use of a hydrophobic membrane placed in the upper portion of a water reservoir. The surplus ozone gas may then be passed through a destruct subsystem such as an ozone destruct catalyst or heated catalyst before being vented.

Electroosmotic cathode water may be used to pressurise portions of an electrochemical ozone generating subsystem of the water treatment system. For example, the electroosmotic cathode water from an electrochemical ozone gas generator operating at the pressure of a reverse osmosis reservoir may be used to provide water to an electrochemical ozone generator operating at the higher pressure of the inlet water or at the pressure of a carbon block or other filter element Therefore, the pressure of an electrochemical ozone generator may be matched to the pressure of the water to be treated with the electroosmotic generated water being used to develop the necessary pressure. In a related example, a secondary electrochemical cell, such as an oxygen generator, may be installed as a subsystem for the sole purpose of delivering high pressure water for use in an electrochemical ozone generator elsewhere in the system.

In an embodiment of the invention, intended for use in systems having a captive gas reservoir (headspace or bladder type) for the delivery of water under pressure, an electrolyzer may be used to pressurise the reservoir. Furthermore, the size of the electrolyzer, reservoir, etc., may be correlated such that delivery of water from the reservoir is at a rate that is matched to the ozone generation rate, ensuring that the water has been suitably engaged with the ozone. Delivery of water at a rate higher than a sustainable ozone generation rate will result in a pressure drop within the reservoir, lowering and eventually stopping water delivery.

In other embodiments of the invention, the electrochemical ozone generator is located inline (such as in a tee) between various subsystems in a water treatment system.

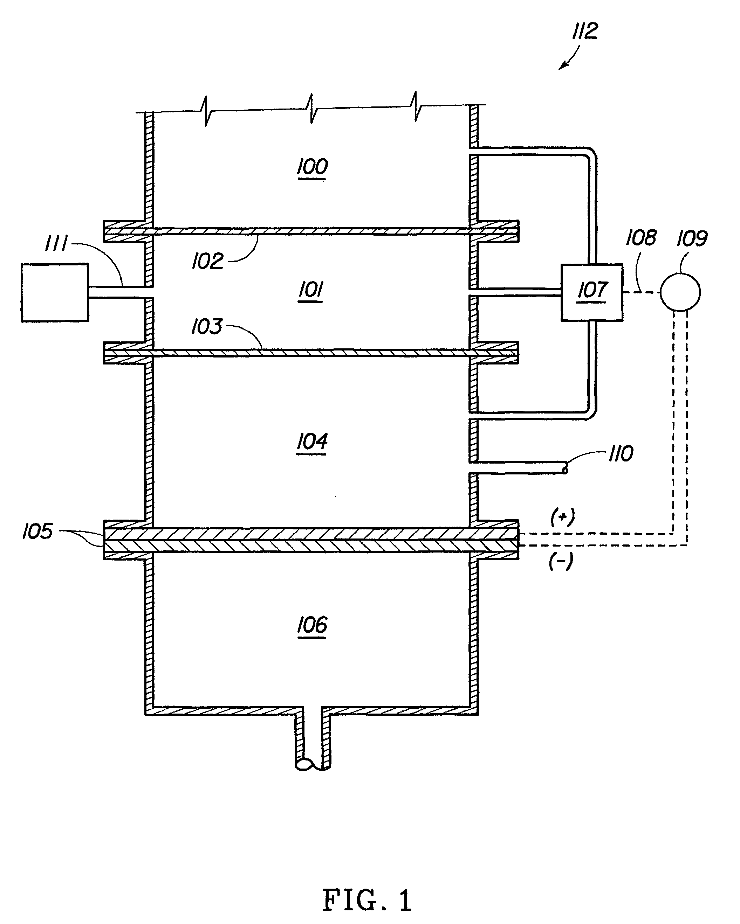

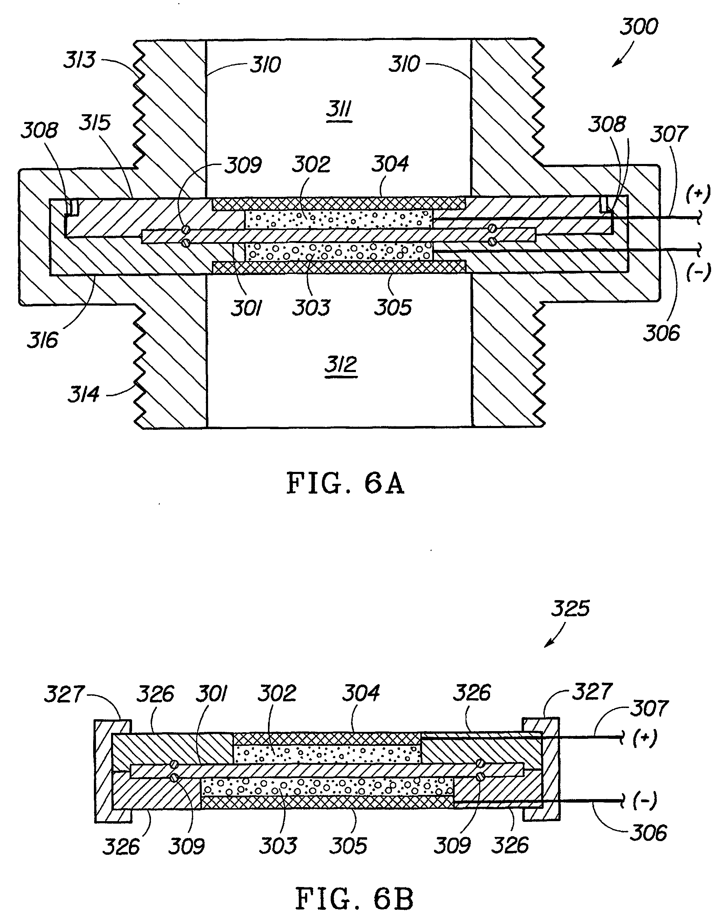

Figure 1 shows an electrochemical ozone generator subsystem 112 having an electrochemical ozone generator 105, (examples of which are shown in Figures 6A and 6B) an anode reservoir 104, a cathode reservoir 106, and is attached to a source of water to be treated 100 with hydrophobic phase separating membranes 102, 103 to prevent the water in the anode 104 from mixing with the water to be treated 100. An intermediate region 101 in the form of a gas space bounded by gas permeable hydrophobic membranes 102, 103 may be held at a pressure significantly different from either of the water containing areas 100, 104. Pressure in the intermediate region 101 and the anode reservoir may be controlled by an external means through connections 111 and 110 respectively. A differential pressure sensing element 107 monitors the pressure differential between the chambers 100, 101, 104 and compares the pressure differential to a predetermined reference. Should the pressure differential fall outside a preferred range, the control system **109** may remove power from the electrolyzer **105** or provide an indication to the user that service is required. Alternatively, if the intermediate reservoir **101** is held at a pressure lower than either the water to be treated **100** or the anode reservoir **104**, a flow monitor on the end of the connector **111** could be used to detect excessive flow of water from either **100** or **104** through a failed membrane **102** or **103** respectively.

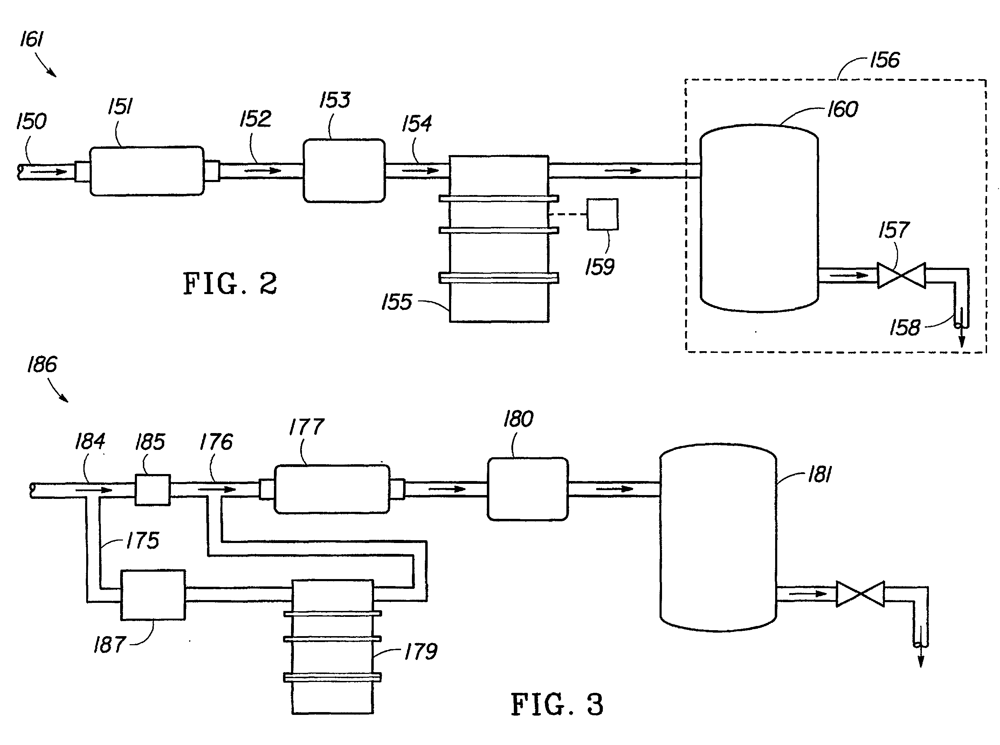

Figure 2 is a block diagram of a water treatment system **161** having an electrochemical ozone generator **155** operating at a pressure substantially higher than ambient pressure. Water at a standard delivery pressure, such as house pressure, is delivered to the system through **150** and enters an initial treatment chamber (such as a filter for the removal of sediment) **151** which provides a pressure drop to the system during water flow so that the water exiting the filter at **152** is at a lower pressure than that entering **150**. A number of additional processing steps (shown as a single step **153** with connections **152** and **154**) may further reduce the water pressure during water flow. An electrochemical ozone generator sub-system **155** and support system **159** (together representing a system such as **112** of Figure 1) is directly attached to the water delivery or distribution system. The pressure of the ozone generator sub-system **155** is allowed to fluctuate with the water pressure in the water delivery or distribution system **156** depending upon the flow rate, the initial inlet pressure to **150**, etc. The ozone is generated and delivered to the distribution system **156** which may also include a water reservoir system **160**, a flow control device **157** and a spigot **158**.

Figure 3 is a block diagram of a water treatment system **186** having an ozone generation and delivery sub-system **179** to deliver and engage ozone on the inlet side to a system where the water quality in the main stream **184**, **176** is not compatible with the requirements of the ozone generator sub-system **179**. A restriction, pressure regulating component, pre-filter, or pre-processing sub-system **185** may be utilized to provide a pressure drop between the inlet water **184** and the point of ozone introduction **176**. This pressure difference will allow water to flow as needed from the water inlet **184** to a water treatment sub-system **187** through a connection **175**. Water may then flow from the conditioning sub-system **187** to the ozone generator sub-system **179**. The ozone generator system may then operate at a pressure comparable to the pressure at the point of ozone introduction in the primary water stream **176**. The ozone generation and introduction may be used across any number of sub-systems **180**, such as reverse osmosis, ultrafiltration, deionization, etc., and reservoirs **181**.

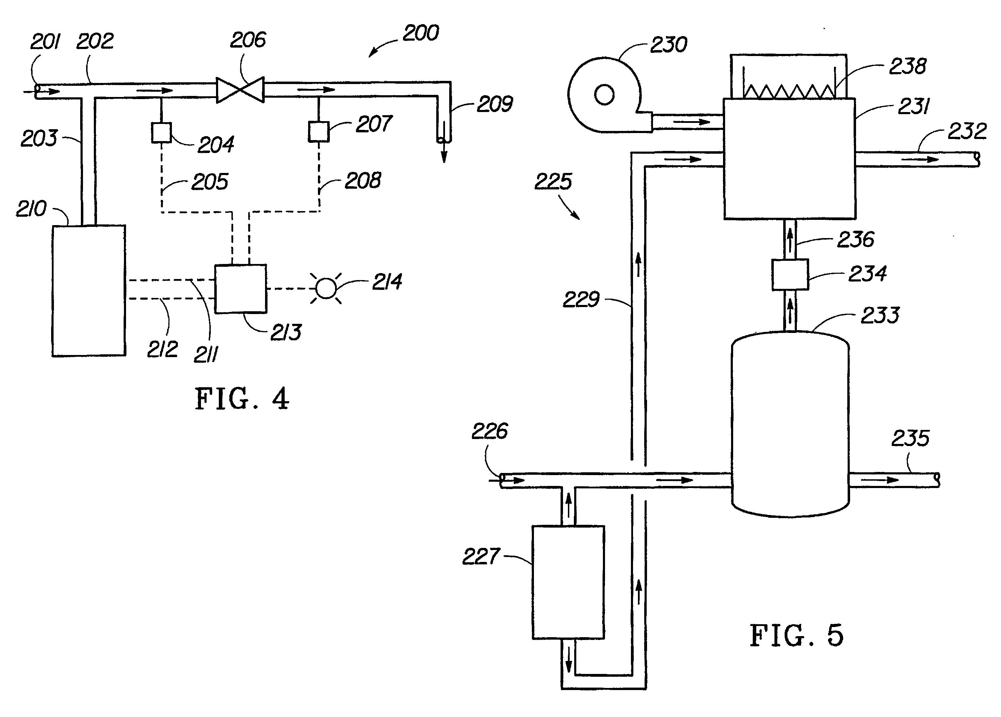

Figure 4 is a block diagram of a water quality monitoring system **200** having an audible or visual indicator **214**. An ozone generation and engagement sub-system **210** delivers ozone through a conduit **203** to the primary water stream **202** entering from a water source **201**. The concentration of ozone is monitored at points throughout the distribution and delivery system using ozone monitors **204**, **207** in connection to a control system **213**. The control system **213** is also provided with the operating parameters of the ozone generator sub-system **210** through connections **211**. Information provided to the controller may include, among other parameters, the current through the ozone generator, the voltages of the generator, temperature, etc. Based upon the available information, the controller **213** may control the operation of the ozone generation sub-system **210** through a connection **212** and may provide one or more indicators **214** as to the status of the system.

Figure 5 is a block diagram showing a possible waste gas destruct sub-system **231** as a part of an overall water treatment sub-system **225**. As the primary water stream **226** is treated with ozone from an ozone generation and engagement sub-system **227** waste hydrogen is generated as a byproduct of the electrochemical reaction. This hydrogen is delivered by a conduit **229** to a waste gas destruct sub-system **231** where the hydrogen is combined using a noble metal catalyst with oxygen from the air delivered by an air pump **230**. Additional oxygen and possibly surplus ozone may be collected from another region of the treatment system such as a reservoir **233**. The surplus gas may be separated from the water by a phase separator **234** and the gas provided to the destruct system **231** through a conduit **236**. Primary water, free from undissolved gas, may be delivered to the distribution and delivery system continuing from conduit **235**. An auxiliary heater **238** may be attached to the destruct sub-system to insure that the catalyst within the destruct system **231** is dry and active. Harmless gaseous and/or liquid products exit the waste gas destruct subsystem **231** by means of conduit **232.**

Figure 6A is a cross sectional diagram of an electrochemical cell **300** that includes a proton exchange membrane (PEM) **301** in contact with an anode catalyst and porous substrate **302** and a cathode catalyst and porous substrate **303.** The anode and cathode substrates are backed by flow fields **304** and **305**, respectively, that may optionally serve as a means of support for the anode and cathode. Electrical connection may be provided by the flow fields **304**, **305** or through electrical conductors **306**, **307** provided specifically for that purpose. A seal **309**, such as an elastomer or bead-and-groove, is preferably provided to seal each side of the proton exchange membrane so that the anode and cathode operate as isolated systems. The entire core assembly **301**, **302**, **303**, **304**, **305**, may be held together by molded plastic pieces **315**, **316** which may be configured to snap together by a latch **308** or otherwise secured to form a single unit. This core assembly may then be used as a single cell electrolyzer or may be injection molded as an insert to form a complete electrolyzer assembly containing an anode reservoir **311**, a cathode reservoir **312** a structural means of support **310** and a means of securing to an associated system by means of threads **313**, **314** shown for the anode and cathode reservoirs **311**, **312** respectively.

Figure 6B is a cross sectional diagram of an electrochemical cell **325**. The system includes a proton exchange membrane (PEM) **301** in contact with an anode catalyst and porous substrate **302** and a cathode catalyst and porous substrate **303**. The anode and cathode substrates are backed by flow fields **304** and **305**, respectively, that may also serve as a means of support for the anode and cathode. Electrical connection may be provided by the flow fields **304**, **305** or through electrical conductors **306**, **307** provided specifically for that purpose. A seal **309**, such as an elastomer or bead-and-groove, is preferably provided to seal each side of the proton exchange membrane so that the anode and cathode operate as isolated systems. The one or two piece ring **326** provides compression on the seal **309** against the proton exchange membrane **301** and prevents molten thermoplastic from entering the flowfields **304**, **305** during a subsequent injection molding process. The ring **326** also eliminates the requirement for direct sealing between the gel like proton exchange membrane **301** and the thermoplastic housing or body formed in subsequent injection molding processes. The entire core assembly **301**, **302**, **303**, **304**, **305** may be held together by a molded plastic clip **327** after assembly and may be removed before injection molding or may be integrated into the molding.

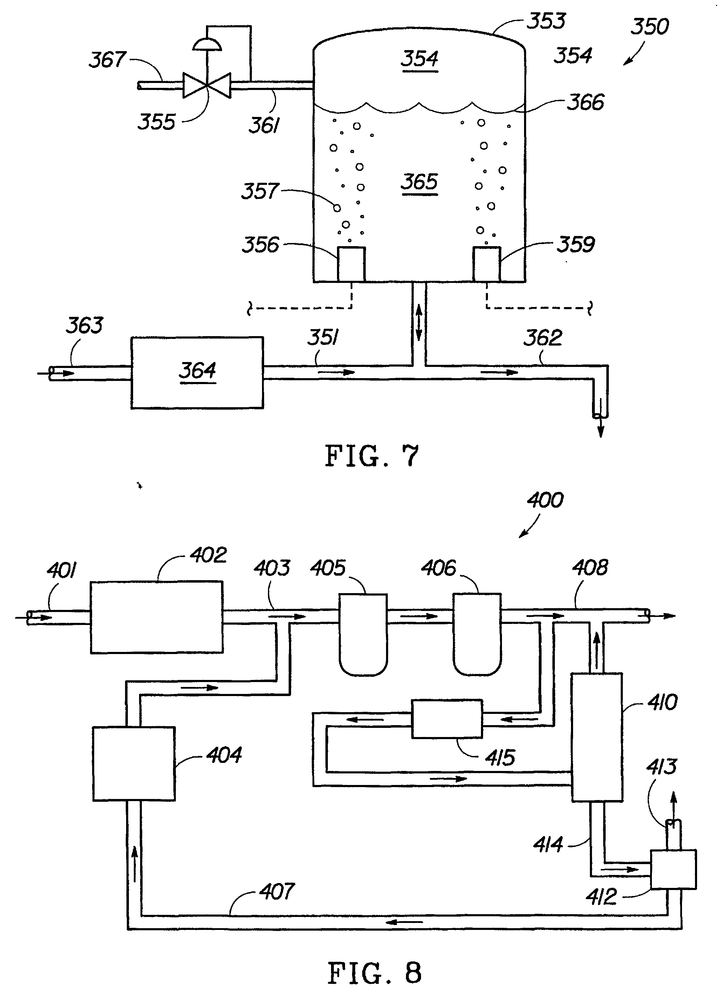

Figure 7 is a schematic diagram of a water treatment, storage, and delivery system **350** that contains a bladderless reservoir **353** to provide water delivery when the water generation rate is substantially less than the short term demand for water so a water reservoir is required. Water is provided to the treatment sub-system **364** from a water source by an inlet **363**. The outlet **351** of the treatment sub-system **364** is in communication with the water delivery system **362** and a water storage reservoir **353**. The water storage reservoir **353** is provided with a headspace **354** that compresses as the reservoir is filled and expands as the water is taken from the reservoir. An ozone generator **356** is placed in communication with the storage reservoir and the ozone gas **357** enters the reservoir and is engaged with the water **365**. As oxygen and ozone gas is added to the reservoir by the electrochemical generators **356**, **359** the pressure in the headspace **354** will increase and if the pressure goes above a preset value, water may exit from the reservoir **353** through a conduit **361** when a back pressure controller **355** opens. The discharge **367** from the backpressure controller **355** may be connected to a suitable drain, phase separator, etc. This back pressure controller may be set to open at a pressure that is higher than the ultimate pressure generated by the water treatment sub-system **364** so that water is not continuously dumped from the reservoir **353** and wasted. As gas is delivered to the reservoir **353**, that gas which is not dissolved in the water will collect in the headspace **354** and eventually increase the pressure in the storage reservoir **353** if water is not removed from the system **350** through conduit **362**. The back pressure controller **355** will then maintain the pressure and the water level **366** within the reservoir at a predetermined maximum. As water is consumed and the headspace **354** expands the pressure within the reservoir **353** will be reduced and the process **364** will resume operation. As water consumption continues and the headspace further increases, the pressure within the reservoir may fall below the point where water delivery is possible and water flow out of the discharge **362** will be significantly reduced or stopped. Therefore, the rate of water delivery from the reservoir **353** is related to the gas generation rate of the electrochemical generators **356**, **359** and the water production rate of the treatment sub-system **364**. Through management of system variables, the system designer may insure that a minimum average contact time is provided.

Figure 8 is a system diagram of a water treatment unit **400** having multiple electrochemical systems operating at various pressures. Water enters a first processing sub-system **402** through a water inlet port **401**. An electrochemical ozone generator **404** injects ozone into the primary stream **403**. However, if the water quality in the primary stream at that point in the water treatment unit is not suitable for use in the electrochemical system **404**, water must be provided from another source at a pressure equal to or higher than the pressure at point **403**. Therefore, a second electrochemical generator may be attached at a point in the main process stream having higher quality water **408** that may be easily treated for use in the electrochemical cell **410** by a pretreatment system **415** such as an ion exchange resin bed. The electroosmotic water and hydrogen gas generated by the electrochemical gas generator **410** may be delivered by a conduit 414 to a phase separator **412** where the gas is released **413** and the water is provided through conduit **407** to the electrochemical gas generator **404**. Therefore, the operating pressure of the electrochemical gas generator **404** may be equal to or substantially higher than the pressure in the main water stream **403**. The water source located downstream after any number of processes **405**, **406**, where the water quality is higher but the pressure is lower than at the water inlet **401** or the gas introduction point **403**, is purer.

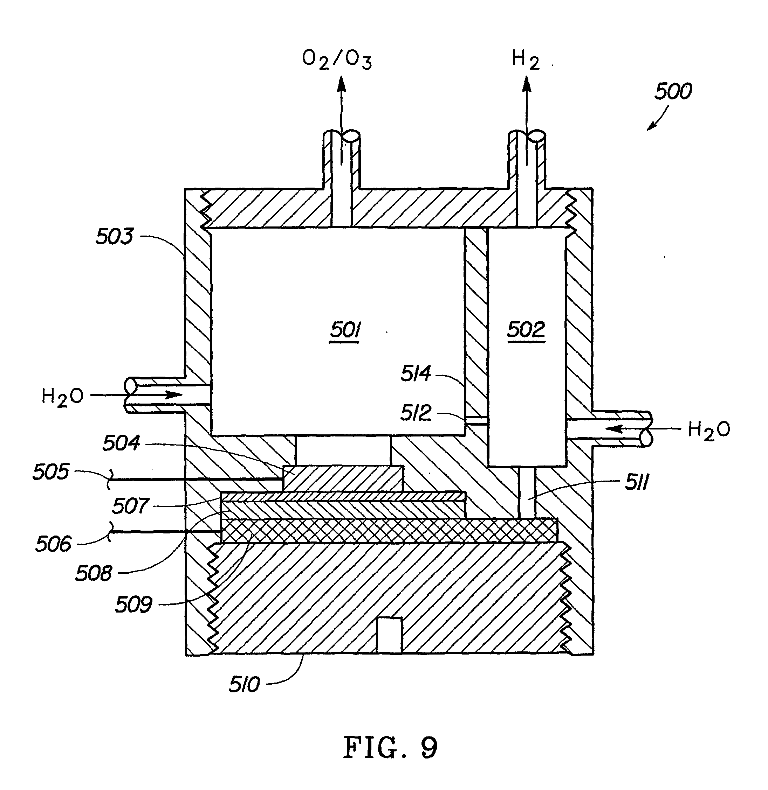

Figure 9 is a diagram of an ozone generator **500** that is designed to operate in direct fluid communication with a water treatment device, such as the water reservoir for a reverse osmosis system. The system is fabricated from a single housing **503** made from a material suitable for use with ozone. The system includes an anode reservoir **501** and an anode frit **504** made from porous titanium having a lead dioxide catalyst coating on the side in contact with the first side of a proton exchange membrane **507**. The second side of the proton exchange membrane is in contact with a second frit **508** made from porous stainless steel. Each porous frit **504**, **508** is provided with a lead **505**, **506** formed from the same material as **504** and **508**, respectively, and spot welded to each frit to provide electrical connection to the anode and cathode. Directly supporting the porous stainless steel frit **508** is an expanded stainless steel flowfield **509** that provides a fluidic connection to the cathode reservoir **502** through a conduit **511**. The assembly **504**, **507**, **508**, **509** is held in place with a threaded plug **510**. The plastic housing **503** accepts the components **504**, **507**, **508**, **509** and provides a seal between the anode and cathode by compressing the proton exchange membrane **507** between the stainless steel cathode frit **508** and the plastic housing **503**. In the present system, cathode water is allowed to return directly to the anode reservoir **501** by a depression **512** in the divider **514** between the anode reservoir **501** and the cathode reservoir **502**. Both the ozone gas and the hydrogen gas are allowed to enter the water in the reservoir or, alternatively, the system may be fitted with a port to redirect the hydrogen to a location other than the anode reservoir **501**.

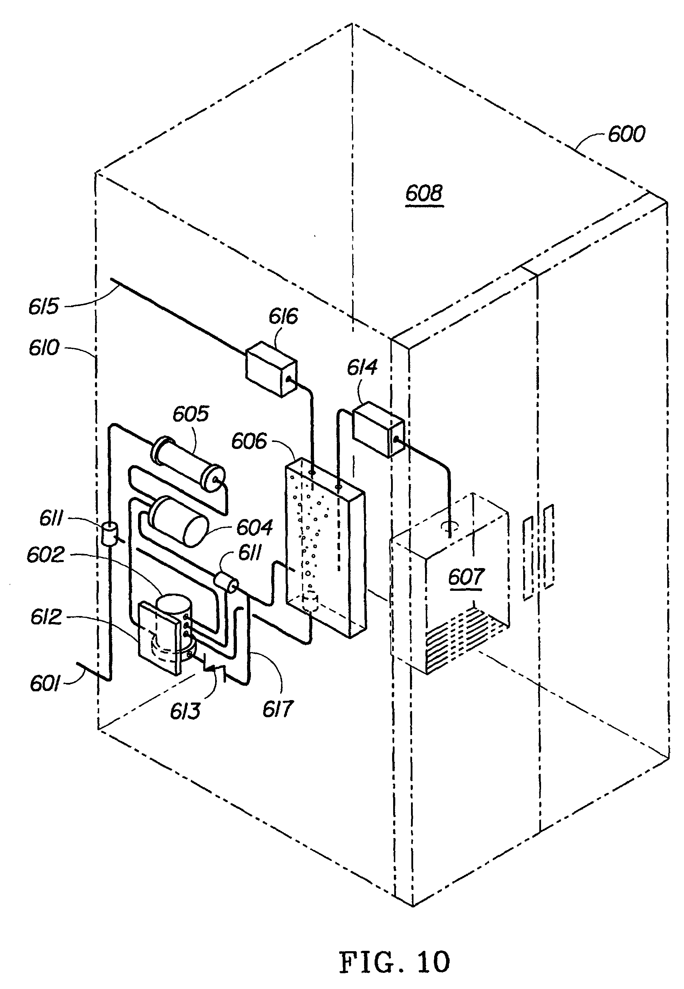

Figure 10 is a schematic diagram showing the integration of a point-of-use microbial control system into a refrigerator having a water dispenser. In this system a refrigerator **600** is provided with a pressurized water supply **601** feeding a carbon filter **605** and a reverse osmosis purifier **604** in series. Water from the reverse osmosis unit **604** is provided through conduit **617** and backflow prevention device **613** to an ozone generator **602** which is in thermal contact with a side wall **610** of the refrigerator compartment **608** but separated by a temperature regulating layer **612** to prevent the electrolyzer from freezing. Ozone from the electrolyzer **602** exits the ozone generator and is distributed among the injection points such as **611** leading to the reverse osmosis purifier and a chilled water storage reservoir **606**. Ozone is removed from the water storage reservoir and surplus ozone is destroyed by an exit gas treatment system **616**. The ozone containing water in the storage reservoir **606** passes through a fluid deozonation system **614** before being delivered to the user at the water dispenser **607**.

### Example

An ozone generator was designed and fabricated in accordance with Figure 9 to produce about 0.16 grams of ozone per 24 hours. A single electrolyzer cell with an active area of approximately 0.08 cm² was used to generate and deliver ozone gas directly to a storage reservoir containing reverse osmosis quality water. The system was fabricated from polyvinyl difluoride (PVDF) and was approximately 2 inches in length. The system consisted of six individual pieces: a plastic housing, an 1/8" diameter porous titanium anode frit coated with lead dioxide, a 1/4" diameter Nafion proton exchange membrane, a 1/4" porous stainless steel frit, and a 1/2" diameter expanded stainless steel flow field and a plug that is screwed into the bottom of the assembly to hold all the components in the housing. The proton exchange membrane is also used as a gasket to provide sealing between the cathode and anode.

The porous titanium and the porous stainless steel frits are fitted with leads that extend outward through the wall of the vessel to provide electrical connection to the porous materials. These leads are potted with epoxy in the housing. The PEM was a sheet of perfluorinated sulfonic acid polymer, NAFION 117.

Cooling for the generator is provided by direct contact with the water reservoir, which is sufficient to dissipate the one-half Watt of thermal energy generated by the device. The system may be operated at any temperature between the freezing and boiling points of water, but most preferably from above freezing to ambient to maximize the lifetime of the ozone gas being generated. No water management is necessary since water is provided by the reverse osmosis system.

A DC power supply having two output levels was fabricated. This power supply provided a nominal constant current of 167 mA in standard operation, and a constant voltage output of 2 volts for standby operation.

While the foregoing is directed to the preferred embodiment of the present invention, other and further embodiments of the invention may be devised without departing from the basic scope thereof, and the scope thereof is determined by the claims which follow.

## Claims

1. An apparatus comprising: (a) a point-of-use water treatment system for potable water having a water inlet (150) and a water outlet (158); (b) an electrochemical ozone generator (155) having an ozone-forming anode (302), a cathode (303), an ion exchange membrane (301) disposed between the anode and the cathode, and a water supply port (100); and (c) an ozone gas delivery channel (104,101,100) providing communication of ozone gas between the anode and the water treatment system, the ozone gas delivery channel having two hydrophobic gas-liquid separator membranes (102,103) disposed therein to form a gas-containing gap (101) to prevent mixing of liquid water between the anode and the water treatment system.

2. The apparatus of Claim 1, wherein the water treatment system includes one or more water treatment devices (151,153), and wherein the water treatment system further comprises a reactant water supply outlet (408) providing fluid communication from a point downstream of at least one of the one or more water treatment devices to the electrochemical ozone generator (155), further comprising a secondary electrochemical cell (410) having an anode in fluid communication with the reactant water supply outlet (408) and a cathode fluid outlet in fluid communication with the anode of the ozone generator (404).

3. The apparatus of Claim 2, wherein the secondary electrochemical cell (410) provides cathode fluid to the anode of the electrochemical ozone generator at a pressure greater than the pressure in the water treatment system adjacent the ozone gas delivery channel (104,101,100).

4. The apparatus of any one of the preceding claims wherein the water treatment system includes a water storage reservoir (353), and wherein the ozone gas delivery channel (104,101,100) communicates ozone gas to pressurise the water storage reservoir.

5. The apparatus of any one of the preceding claims, further comprising a differential pressure sensor (107) to detect the pressure differential across the hydrophobic gas-liquid separator membrane, and further comprising a controller (109) in electronic communication with the differential pressure sensor and the electrochemical ozone generator (105), wherein the controller controls the operation of the electrochemical ozone generator.

6. The apparatus of any one of the preceding claims, further comprising: a liquid water sensor disposed in the gas chamber (101); and a controller in communication with the liquid water sensor and the electrochemical ozone generator.

7. The apparatus of any one of the preceding claims, further comprising a catalytic destruct system (231) in selective communication with the ozone outlet and the cathode to convert hydrogen and ozone to water vapour and oxygen.

8. The apparatus of any one of the preceding claims, wherein the anode (302), cathode (303) and ion exchange membrane (301) are secured in intimate contact within a pre-moulded thermoplastic frame (315, 316).

9. The apparatus of any one of the preceding claims, wherein the water treatment system has a water treatment device (151,152,153), wherein the water treatment device is a particle filter, ultrafiltration unit, carbon filter, water softener, ion exchange bed, reverse osmosis membrane, electrodeionization device, electrodialysis device or combinations thereof.

10. The apparatus of Claim 9, wherein the water treatment device (151,152,153) and the electrochemical ozone generator (112) are disposed in a common housing (503) having a water inlet and a water outlet, wherein the housing includes an outlet for removing gases evolved at the anode and cathode.

## Patentansprüche

1. Vorrichtung, welche umfaßt: (a) ein Wasserbehandlungssystem, zum Einsatz am Verwendungsort, für Trinkwasser, mit einem Wassereinlaß (150) und einem Wasserauslaß (158); (b) einen elektrochemischen Ozongenerator (155) mit einer Ozonbildenden Anode (302), einer Kathode (303), einer Ionenaustauschmembran (301), die zwischen der Anode und der Kathode angeordnet ist, und einer Wasserzufuhröffnung (100); und (c) einen Ozongasabgabekanal (104, 101, 100), der eine Überführung von Ozongas zwischen der Anode und dem Wasserbehandlungssystem bereitstellt, wobei der Ozongasabgabekanal zwei hydrophobe Gas-Flüssig-Trennrnembranen (102, 103) aufweist, die darin angeordnet sind, um einen Gas enthaltenden Zwischenraum (101) zu bilden, um das Vermischen von flüssigem Wasser zwischen der Anode und dem Wasserbehandlungssystem zu verhindern.

2. Vorrichtung nach Anspruch 1, **dadurch gekennzeichnet, daß** das Wasserbehandlungssystem eine oder mehrere Wasserbehandlungseinrichtungen (151, 153) einschließt und daß das Wasserbehandlungssystem weiter einen Reaktantwasserzuführauslaß (408) umfaßt, der eine Fließverbindung von einem Punkt stromabwärts wenigstens einer der einen oder mehreren Wasserbehandlungseinrichtungen zum elektrochemischen Ozongenerator (155) bereitstellt, wobei es weiterhin eine sekundäre elektrochemische Zelle (410) mit einer Anode in Fließverbindung mit dem Reaktantwasserzuführauslaß (408) und einem Kathodenfluidauslaß in Fließverbindung mit der Anode des Ozongenerators (404) umfaßt.

3. Vorrichtung nach Anspruch 2, **dadurch gekennzeichnet, daß** die sekundäre elektrochemische Zelle (410) Kathodenfluid für die Anode des elektrochemischen Ozongenerators bei einem höheren Druck als dem Druck im Wasserbehandlungssystem benachbart dem Ozongasabgabekanal (104, 101, 100) bereitstellt.

4. Vorrichtung nach einem der vorangehenden Ansprüche, **dadurch gekennzeichnet, daß** das Wasserbehandlungssystem einen Wasservorratsspeicher (353) einschließt und daß der Ozongasabgabekanal (104, 101, 100) Ozongas weiterleitet, um den Vorratsspeicher unter Druck zu setzen.

5. Vorrichtung nach einem der vorangehenden Ansprüche, **dadurch gekennzeichnet, daß** sie weiter einen Differenzdrucksensor (107) umfaßt, um den Druckunterschied über die hydrophobe Gas-Flüssig-Trennmembran zu bestimmen, und weiter eine Steuereinheit (109) in elektronischer Verbindung mit dem Differenzdrucksensor und dem elektrochemischen Ozongenerator (105) umfaßt, wobei die Steuereinheit den Betrieb des elektrochemischen Ozongenerators steuert.

6. Vorrichtung nach einem der vorangehenden Ansprüche, **dadurch gekennzeichnet, daß** sie weiter umfaßt: einen Flüssigwassersensor, der in der Gaskammer (101) angeordnet ist; und eine Steuereinheit in Verbindung mit dem Flüssigwassersensor und dem elektrochemischen Ozongenerator.

7. Vorrichtung nach einem der vorangehenden Ansprüche, **dadurch gekennzeichnet, daß** sie weiter ein katalytisches Zersetzungssystem (231) in selektiver Verbindung mit dem Ozonauslaß und der Kathode umfaßt, um Wasserstoff und Ozon in Wasserdampf und Sauerstoff umzuwandeln.

8. Vorrichtung nach einem der vorangehenden Ansprüche, **dadurch gekennzeichnet, daß** die Anode (302), Kathode (303) und Ionenaustauschmembran (301) in innigem Kontakt mit einem vorgeformten thermoplastischen Rahmen (315, 316) befestigt sind.

9. Vorrichtung nach einem der vorangehenden Ansprüche, **dadurch gekennzeichnet, daß** das Wasserbehandlungssystem eine Wasserbehandlungseinrichtung (151, 152, 153) aufweist, wobei die Wasserbehandlungseinheit ein Teilchenfilter, eine Ultrafiltrationseinheit, ein Kohlefilter, ein Wasserenthärter, ein Ionenaustauschbett, eine Umkehrosmosemembran, eine Elektroentionisierungseinrichtung, eine Elektrodialyseeinrichtung oder Kombinationen derselben ist.

10. Vorrichtung nach Anspruch 9, **dadurch gekennzeichnet, daß** die Wasserbehandlungseinrichtung (151, 152, 153) und der elektrochemische Ozongenerator (112) in einem gemeinsamen Gehäuse (503) mit einem Wassereinlaß und einem Wasserauslaß angeordnet sind, wobei das Gehäuse einen Auslaß zum Entfemen von Gasen einschließt, die an der Anode und Kathode entstanden sind.

## Revendications

1. Appareil comprenant : (a) un système de traitement d'eau pour un point d'utilisation destiné à de l'eau potable possédant une entrée d'eau (150) et une sortie d'eau (158) ; (b) un générateur d'ozone électrochimique (155) possédant une anode formant de l'ozone (302), une cathode (303) et une membrane d'échange d'ions (301) disposée entre l'anode et la cathode, et un orifice d'alimentation en eau (100) ; et (c) un canal d'écoulement d'ozone gazeux (104, 101, 100) fournissant une communication d'ozone gazeux entre l'anode et le système de traitement d'eau, le canal d'écoulement d'ozone gazeux possédant deux membranes séparatrices gaz-liquide hydrophobes (102, 103) disposées dedans pour former un espace contenant du gaz (101) en vue d'éviter un mélange d'eau liquide entre l'anode et le système de traitement d'eau.

2. Appareil selon la revendication 1, dans lequel le système de traitement d'eau inclut un ou plusieurs dispositifs de traitement d'eau (151, 153), et dans lequel le système de traitement d'eau comprend de plus une sortie d'alimentation en eau réactive (408) fournissant une communication fluide à partir d'un point en aval d'au moins un d'un ou plusieurs des dispositifs de traitement d'eau vers le générateur d'ozone électrochimique (155) comprenant de plus une cellule électrochimique secondaire (410) possédant une anode en communication fluide avec la sortie d'alimentation en eau réactive (408) et une sortie de fluide cathodique en communication fluide avec l'anode du générateur d'ozone (404).

3. Appareil selon la revendication 2, dans lequel la cellule Electrochimique secondaire (410) fournit un fluide cathodique à l'anode du générateur d'ozone électrochimique à une pression supérieure à la pression dans le système de traitement d'eau adjacent au canal d'écoulement d'ozone gazeux (104, 101, 100).

4. Appareil selon l'une quelconque des revendications précédentes, dans lequel le système de traitement d'eau inclut un réservoir de stockage d'eau (353), et dans lequel le canal d'écoulement d'ozone gazeux (104, 101, 100) livre l'ozone gazeux pour mettre sous pression le réservoir de stockage d'eau.

5. Appareil selon l'une quelconque des revendications précédentes, comprenant de plus un capteur de pression différentielle (107) pour détecter la pression différentielle à travers la membrane séparatrice gaz-liquide hydrophobe, et comprenant de plus un régulateur (109) en communication électronique avec le capteur de pression différentielle et le générateur d'ozone électrochimique (105), dans lequel le régulateur commande le fonctionnement du générateur d'ozone électrochimique.

6. Appareil selon l'une quelconque des revendications précédentes, comprenant de plus : un capteur d'eau liquide disposé dans une chambre à gaz (101) ; et un régulateur en communication avec le capteur d'eau liquide et le générateur d'ozone électrochimique.

7. Appareil selon l'une quelconque des revendications précédentes, comprenant de plus un système de destruction catalytique (231) en communication sélective avec la sortie d'ozone et la cathode pour convertir l'hydrogène et l'ozone en vapeur d'eau et oxygène.

8. Appareil selon l'une quelconque des revendications précédentes, dans lequel l'anode (302), la cathode (303) et la membrane d'échange d'ions (301) sont fixées en contact intime à l'intérieur d'un cadre thermoplastique pré-moulé (315, 316).

9. Appareil selon l'une quelconque des revendications précédentes, dans lequel le système de traitement d'eau possède un dispositif de traitement d'eau (151, 152, 153), dans lequel le dispositif de traitement d'eau est un filtre de particules, une unité d'ultrafiltration, un filtre à charbon actif, un adoucisseur d'eau, un lit d'échange d'ions, une membrane d'osmose inverse, un dispositif d'électrodésionisation, un dispositif d'électrodialyse ou leurs combinaisons.

10. Appareil selon la revendication 9, dans lequel le dispositif de traitement d'eau (151, 152, 153) et le générateur d'ozone électrochimique (112) sont disposés dans un logement commun (503) possédant une entrée d'eau et une sortie d'eau, dans lequel le logement inclut une sortie en vue d'éliminer les gaz émis au niveau de l'anode et de la cathode.
